# EUROPÄISCHE PATENTSCHRIFT

(11) **EP 2 454 932 B1**
(45) Veröffentlichungstag und Bekanntmachung des Hinweises auf die Patenterteilung: **18.09.2013**
(21) Anmeldenummer: 11009089.1
(22) Anmeldetag: 16.11.2011
(51) Int. Cl.: A01D 75/20, A01D 34/82

(54) **Manuell bedienbares Gartengerät und Verfahren zur Überwachung des Gartengerätes**
Manually operable gardening device and method for monitoring a gardening device
Appareil de jardinage à commande manuelle et procédé de surveillance de l'appareil de jardinage

(30) Priorität: 18.11.2010 DE 102010051647
(43) Veröffentlichungstag der Anmeldung: 23.05.2012
(73) Patentinhaber: AL-KO Kober AG, 89359 Kötz (DE)
(72) Erfinder: DeFilippo, Antonio, 73342 Bad Ditzenbach (DE)
(74) Vertreter: Binder, Armin

(56) Entgegenhaltungen:
- EP-A2- 0 996 003
- DE-A1- 3 211 731
- DE-A1- 3 531 392
- US-A1- 2006 042 212
- US-B1- 6 173 233

## Beschreibung

Die Erfindung betrifft ein manuell bedienbares Gartengerät, aufweisend einen Sitz zur Aufnahme eines Bedieners des Gartengerätes, ein Gehäuse mit Rädern, eine Lenkvorrichtung, insbesondere ein Lenkrad, einen Antriebsmotor, mindestens ein rotierbares Werkzeug und eine Kraftübertragung zwischen Antriebsmotor und dem mindestens einen Werkzeug.

Außerdem betrifft die Erfindung ein Verfahren zur Überwachung dieses Gartengerätes.

Gartengeräte gemäß dem Oberbegriff des Patentanspruches 1 sind allgemein bekannt. Bei solchen Gartengeräten besteht allgemein das Problem, dass eine unsachgemäße Handhabung eines solchen Gerätes oder eine unsachgemäße Annäherung an ein solches Gerät im laufenden Zustand zu zum Teil schwerwiegenden Verletzungen oder Schäden führen kann.

Es ist allgemein bekannt, dass man versucht durch entsprechende Abdeckungen oder Sicherheitsschaltungen bei der Bedienung solcher Geräte dafür zu sorgen, dass möglichst Verletzungen und Schäden vermieden werden, jedoch lässt sich, insbesondere bei Geräten die rotierende Werkzeuge aufweisen und mechanische Bearbeitungen erzeugen sollen, nicht jegliches gefährdende Werkzeug abdecken, da es Teil der Arbeit des jeweiligen Gartengerätes ist, durch mechanische Gewalt dieser Werkzeuge auf den Untergrund oder den Rasen einzuwirken.

Aus US 2006/042212 A1 ist ein Rasenmäher bekannt, welcher mindestens ein Sensor zur Detektion eines sich relativ zum Rasenmäher bewegenden oder einen vorgegebenen Abstand unterschreitenden Objektes aufweist, wobei bei einer positiven Detektion ein Alarmzustand ausgelöst wird. Weiter weist der Rasenmäher eine Überrangschaltung auf, welche den Alarmzustand unterdrücken kann.

Es ist daher Aufgabe der Erfindung, ein Gartengerät gemäß dem Oberbegriff des Patentanspruches 1 zu finden, welches einen verbesserten Schutz gegenüber möglichen Verletzungen oder Schädigungen durch das Gartengerät aufweist. Entsprechend soll auch ein Verfahren zur Überwachung eines solchen Gartengerätes gefunden werden, das ebenfalls solche Verletzungen oder Schädigungen vermeidet.

Diese Aufgabe wird durch die Merkmale der unabhängigen Patentansprüche gelöst. Vorteilhafte Weiterbildungen der Erfindung sind Gegenstand untergeordneter Ansprüche.

Der Erfinder hat erkannt, dass es möglich ist, ein solches Gartengerät mit entsprechenden Sensoren auszustatten, welche die Bereiche, in denen mögliche Schädigungen auftreten können, abtasten und durch entsprechende Schaltungen dafür sorgen, dass, falls Gegenstände oder Personen in solche Bereiche eindringen, ein Alarmzustand ausgelöst wird oder automatisch Stilllegungen von Werkzeug oder Antrieb ausgeführt werden, wodurch eine Schädigung oder Verletzung verhindert wird.

Entsprechend diesem Grundgedanken schlägt der Erfinder ein manuell bedienbares Gartengerät mit einem Sitz zur Aufnahme eines Bedieners des Gartengerätes, einem Gehäuse mit Rädern, einer Lenkvorrichtung, insbesondere einem Lenkrad, einem Antriebsmotor, mindestens einem rotierbaren Werkzeug und einer Kraftübertragung zwischen Antriebsmotor und dem mindestens einen Werkzeug vor. Die erfindungsgemäße Verbesserung dieses Gartengerätes besteht darin, dass am Gartengerät mindestens ein Sensor zur Detektion eines sich relativ zum Gartengerät bewegenden oder einen vorgegebenen Abstand unterschreitenden Objektes angeordnet ist, ein Schalter oder Schaltsignalgeber vorgesehen ist, der mit dem Sensor derart in Verbindung steht, dass er bei einer positiven Detektion einen Alarmzustand auslösen kann, und mindestens eine Überrangschaltung angebracht ist, welche den Alarmzustand unterdrücken kann, wobei die mindestens eine Überrangschaltung eine automatische Rückfallfunktion aufweist.

Vorteilhaft kann eine Schaltungsanordnung derart vorgesehen werden, dass beim Vorliegen eines Alarmzustandes ein Alarmsignal ausgelöst wird und/oder dass eine automatische Entkopplungsvorrichtung der Kraftübertragung vorliegt und eine Schaltungsanordnung derart vorgesehen ist, dass beim Vorliegen des Alarmzustandes die automatische Entkopplungsvorrichtung angesteuert wird, um den Antriebsmotor vom Schneidwerk zu entkoppeln.

Ergänzend kann auch eine Bremsvorrichtung vorgesehen werden, welche zumindest beim Vorliegen eines Alarmzustandes die Bewegung des Werkzeuges und/oder der Kraftübertragung stoppt.

Vorteilhaft können an diesem Gartengerät mehrere Sensoren angeordnet werden, welche vorteilhaft die gesamte unmittelbare Umgebung des Gartengerätes abdecken. Es wird allerdings darauf hingewiesen, dass es auch möglich ist, Sensoren ausschließlich im unmittelbaren Bereich der Kraftübertragung oder der Werkzeuge anzubringen, so dass ausschließlich eine Annäherung an die Kraftübertragung beziehungsweise an die Werkzeuge detektiert wird.

Weiterhin ist mindestens eine Überrangschaltung angebracht, welche den Alarmzustand unterdrücken kann. Hierdurch kann es beispielsweise dem Bediener des Gartengerätes ermöglicht werden, auch Randbereiche zu bearbeiten. Zum Beispiel wenn ein Rasenmäher an einen Gartenzaun heranfahren soll kann es notwendig sein, mit Hilfe einer solchen Überrangschaltung das automatische Abschalten des Rasenmähers aufgrund der Annäherung an den Gartenzaun oder beispielsweise auch einen in der Wiese stehenden Baum zu verhindern.

Vorteilhaft kann es hierbei auch sein, wenn zur Auslösung der Überrangschaltung mindestens ein federbelasteter Taster im Bereich des Lenkrades angebracht ist, welcher ohne Betätigung selbständig in einen, die Überrangschaltung nicht auslösenden Grundzustand übergeht. Grundsätzlich entspricht dies einer Zeitschaltung, bei der der Bediener kurz einen Schalter betätigen kann, wobei die Überrangschaltung nach einer bestimmten Zeit wieder automatisch abgeschaltet wird.

In einer alternativen Variante können zur Auslösung der Überrangschaltung auch mehrere federbelastete Taster im Bereich des Lenkrades angebracht werden, welche ohne Betätigung selbständig in einen, die Überrangschaltung nicht auslösenden Grundzustand übergehen und im betätigten Zustand jeweils nur einen vorgegebenen Teil der Sensoren übersteuern. Durch diese Ausführungsweise der Überrangschaltung wird erreicht, dass der Bediener individuell nur einen bestimmten Bereich der Sensoren durch die Überrangschaltung ausschaltet, wobei die restlichen durch die Sensorik überwachten Bereiche weiterhin aktiv bleiben. Entsprechend weist die mindestens eine Überrangschaltung eine automatische Rückfallfunktion auf.

Eine solche Rückfallfunktion kann derart ausgebildet sein, dass nach dem Auslösen der Überrangschaltung nach Ablauf einer vorgegebenen Zeitspanne die Überrangschaltung aufgelöst wird. Alternativ kann diese Rückfallfunktion auch so ausgebildet sein, dass diese den mindestens einen übergangenen Sensor überwacht und die Überrangschaltung entfernt, sobald im überwachten Abstandsbereich sich kein Objekt mehr befindet. Wird unter solchen Umständen beispielsweise ein Rasentraktor an einen im Mähbereich oder nah am Mähbereich befindlichen Baum herangesteuert, so kann der Bediener diese Überrangschaltung für diesen Bereich betätigen, wobei die Sensoren automatisch registrieren, wie lange dieser Baum noch im abgetasteten Bereich vorliegt und sobald der Baum sich aus diesem Bereich entfernt, wird automatisch die Überrangschaltung wieder aufgelöst und der normale überwachte Betrieb wird weitergeführt.

Wie bereits erwähnt, kann es sich bei dem vorgeschlagenen Gartengerät beispielsweise um einen Aufsitzmäher handeln, welcher als rotierbare Werkzeuge Schneidmesser aufweist.

Des Weiteren können als Sensoren beispielsweise Infrarotsensoren, Ultraschallsensoren, Laserscanner oder Bildaufnahmevorrichtungen mit entsprechender Bewegungserkennungsvorrichtung für die aufgenommenen Bilddaten verwendet werden, wobei die oben genannten Sensoren auch in Kombination anwendbar sind.

Neben dem erfindungsgemäßen Gartengerät schlägt der Erfinder auch ein Verfahren zur Überwachung eines solchen Gartengerätes gemäß dem Oberbegriff des Patentanspruches 1 vor, wobei erfindungsgemäß mit Hilfe des mindestens eines Sensors eine Annäherung eines Objektes oder eine Annäherung an ein Objekt im unmittelbaren Umgebungsbereich des Gartengerätes detektiert wird und bei Unterschreiten eines vorgegebenen Abstandes ein Alarmzustand ausgelöst wird, wobei mit Hilfe der mindestens einer Überrangschaltung die Auslösung eines Alarmzustandes unterdrückt werden kann.

Beim Auftreten des Alarmzustandes kann beispielsweise ein Alarmsignal ausgelöst werden oder es kann eine automatische Entkopplung der Kraftübertragung erfolgen, wodurch der Antriebsmotor vom Werkzeug entkoppelt wird. Zusätzlich kann hierbei auch eine Abbremsung der Bewegung des Werkzeuges und/oder der Kraftübertragung ausgeführt werden.

Vorzugsweise werden die Abstandssensoren so angebracht, dass die gesamte Umgebung des Gartengerätes überwacht wird.

Schließlich wird auch vorgeschlagen, dass als Sensor eine Kamera verwendet wird und mit Hilfe der Bildverarbeitungssoftware ausschließlich Bewegungen detektiert werden, in denen sich ein Objekt relativ zur sonstigen Umgebung auf das Gartengerät zu bewegt.

Im Folgenden wird die Erfindung anhand eines bevorzugten Ausführungsbeispieles mit Hilfe der Figuren näher beschrieben, wobei nur die zum Verständnis der Erfindung notwendigen Merkmale dargestellt sind.

Es zeigen im Einzelnen:
- FIG 1:: Rasentraktor mit acht Sensoren für vollständige Rundumabdeckung;
- FIG 2:: Rasentraktor mit vier Sensoren ausschließlich im Bereich des Mähdecks.

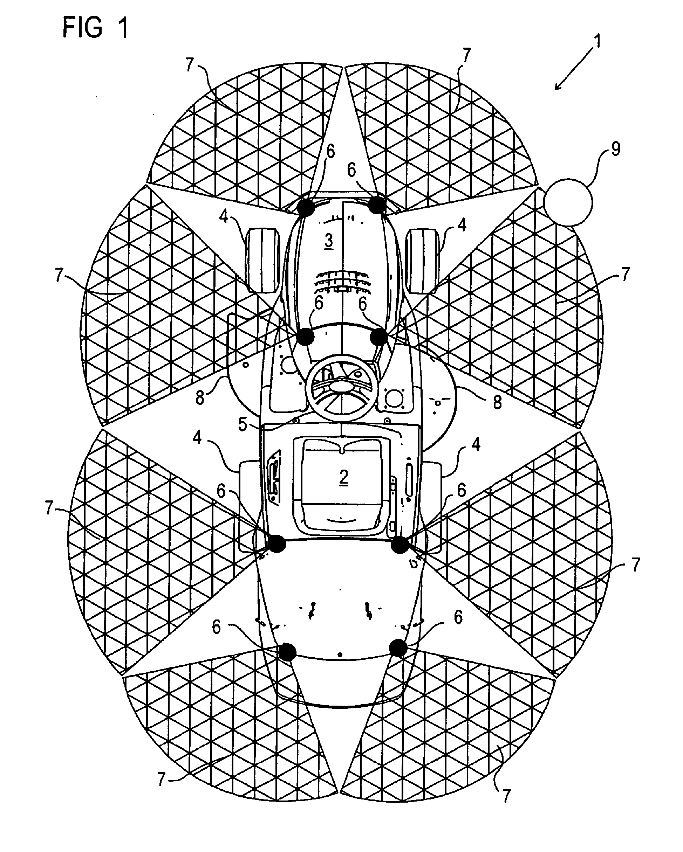

Die **Figur 1** zeigt ein erfindungsgemäßes Gartengerät 1 mit einem Sitz 2 zur Aufnahme eines Bedieners des Gartengerätes, einem Gehäuse 3 mit Rädern 4 und einem als Lenkvorrichtung ausgebildetem Lenkrad 5. Unter dem Gehäuse 3 befindet sich ein nicht näher dargestellter Antriebsmotor. Des Weiteren sind bei diesem Gartengerät in Bodennähe als rotierende Werkzeuge Schneidmesser angeordnet, die über eine Kraftübertragung vom Antriebsmotor angetrieben werden. Dieser hier gezeigte Rasenmäher verfügt erfindungsgemäß über acht Sensoren 6, welche jeweils Fächer mit einem Öffnungswinkel von ungefähr 80° abdecken. Nähert sich beispielsweise eine Person diesem Rasenmäher, während dieser im Betrieb ist, oder nähert sich der Rasenmäher einem Baumstamm 9, wird die Annäherung durch die entsprechenden Sensoren 6 detektiert, so dass ein entsprechender Alarmzustand ausgelöst wird und gegebenenfalls der Antrieb stillgelegt wird.

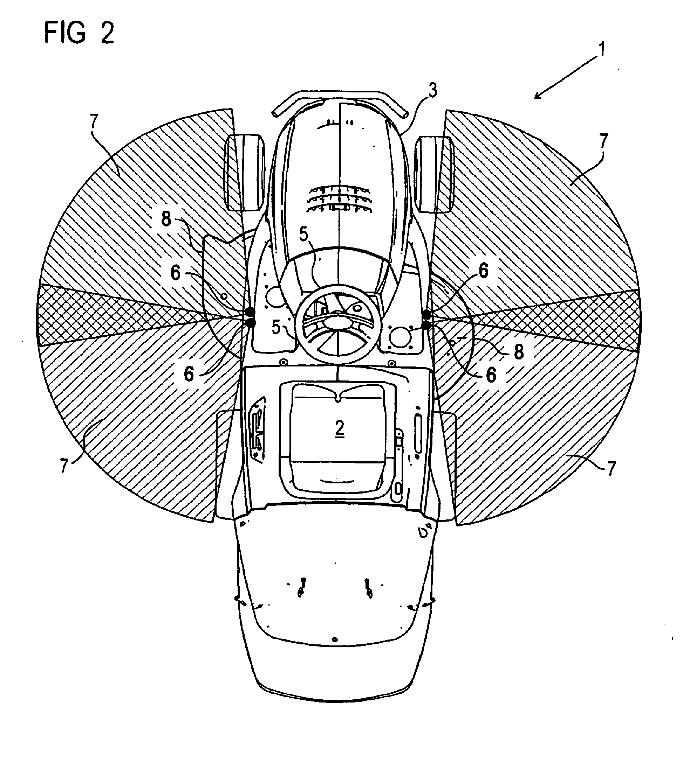

Alternativ zeigt die **Figur 2** einen ähnlichen Rasenmäher 1, wobei allerdings lediglich vier Sensoren im Bereich der Werkzeuge, die unter dem Mähdeck 8 angebracht sind, vorliegen. Im Unterschied zu der Darstellung aus Figur 1 sind hierbei diese vier Sensoren jeweils paarweise nahezu am gleichen Ort angebracht, wobei sich deren Abtastbereiche 7 teilweise überdecken und insgesamt einen Bereich von etwa 180° überstreichen. Hierdurch kann der gesamte Bereich des Werkzeuges auf beiden Seiten des Rasenmähers beobachtet werden, so dass sobald eine Annäherung an diesen kritischen Bereich des Werkzeuges erfolgt und ein entsprechender Alarmzustand ausgelöst wird, gegebenenfalls das Werkzeug stillgelegt wird.

### Bezugszeichenliste

- 1: Gartengerät
- 2: Sitz
- 3: Gehäuse
- 4: Räder
- 5: Lenkrad
- 6: Sensoren
- 7: Abtastbereich
- 8: Mähdeck
- 9: Objekt/Baumstamm

## Patentansprüche

1. Manuell bedienbares Gartengerät (1), aufweisend:
1.1 einen Sitz (2) zur Aufnahme eines Bedieners des Gartengerätes,
1.2 ein Gehäuse(3) mit Rädern (4),
1.3 eine Lenkvorrichtung, insbesondere ein Lenkrad (5),
1.4 einen Antriebsmotor,
1.5 mindestens ein rotierbares Werkzeug, und
1.6 eine Kraftübertragung zwischen Antriebsmotor und dem mindestens einen Werkzeug, wobei
1.7 am Gartengerät mindestens ein Sensor (6) zur Detektion eines sich relativ zum Gartengerät (1) bewegenden oder einen vorgegebenen Abstand unterschreitenden Objektes (9) angeordnet ist,
1.8 ein Schalter oder Schaltsignalgeber vorgesehen ist, der mit dem Sensor derart in Verbindung steht, dass er bei einer positiven Detektion einen Alarmzustand auslösen kann, und
1.9 mindestens eine Überrangschaltung angebracht ist, welche den Alarmzustand unterdrücken kann, **dadurch gekennzeichnet, dass**
1.10 die mindestens eine Überrangschaltung eine automatische Rückfallfunktion aufweist.

2. Gartengerät gemäß dem voranstehenden Patentanspruch 1, **dadurch gekennzeichnet, dass** eine automatische Entkopplungsvorrichtung der Kraftübertragung vorliegt und eine Schaltungsanordnung derart vorgesehen ist, dass beim Vorliegen des Alarmzustandes die automatische Entkopplungsvorrichtung angesteuert wird, um den Antriebsmotor vom Schneidwerk zu entkoppeln.

3. Gartengerät gemäß dem voranstehenden Patentanspruch 2, **dadurch gekennzeichne**t, dass eine Bremsvorrichtung vorgesehen ist, welche zumindest beim Vorliegen eines Alarmzustandes die Bewegung des Werkzeuges und/oder der Kraftübertragung stoppt.

4. Gartengerät gemäß einem der voranstehenden Patentansprüche 1 bis 3, **dadurch gekennzeichnet, dass** zur Auslösung der Überrangschaltung mindestens ein federbelasteter Taster im Bereich des Lenkrades (5) angebracht ist, welcher ohne Betätigung selbständig in einen, die Überrangschaltung nicht auslösenden Grundzustand übergeht.

5. Gartengerät gemäß einem der voranstehenden Patentansprüche 1 bis 4, **dadurch gekennzeichnet, dass** die Rückfallfunktion derart ausgebildet ist, dass diese den mindestens einen übergangenen Sensor (6) überwacht und die Überrangschaltung entfernt, sobald sich im überwachten Abstandsbereich kein Objekt befindet.

6. Verfahren zur Überwachung eines Gartengerätes gemäß dem Oberbegriff des Patentanspruches 1, **dadurch ge**- **kennzeichnet**, dass mit Hilfe des mindestens eines Sensors (6) eine Annäherung eines Objektes oder eine Annäherung an ein Objekt im unmittelbaren Umgebungsbereich des Gartengerätes (1) detektiert wird und bei Unterschreiten eines vorgegebenen Abstandes ein Alarmzustand ausgelöst wird, wobei mit Hilfe der mindestens einer Überrangschaltung die Auslösung eines Alarmzustandes unterdrückt werden kann.

7. Verfahren gemäß dem voranstehenden Patentanspruch 6, **dadurch gekennzeichnet, dass** eine automatische Entkopplung der Kraftübertragung erfolgen, wodurch der Antriebsmotor vom Werkzeug entkoppelt wird.

## Claims

1. Manually operable gardening device (1) comprising:
1.1 a seat (2) for accommodating an operator of the gardening device,
1.2 a housing (3) having wheels (4),
1.3 a steering device, in particular a steering wheel (5),
1.4 a drive motor,
1.5 at least one rotatable tool, and
1.6 a force transmission means between the drive motor and the at least one tool, wherein
1.7 at least one sensor (6) for detecting an object (9) which moves relative to the gardening device (1) or undershoots a predefined distance is arranged on the gardening device,
1.8 a switch or switching signal generator is provided which is connected to the sensor in such a way that in the event of positive detection it can trigger an alarm state, and
1.9 at least one override circuit which can suppress the alarm state is provided, **characterized in that**
1.10 the at least one override circuit has an automatic fall back function.

2. Gardening device according to the preceding patent Claim 1, **characterized in that** an automatic decoupling device for the force transmission means is present and a circuit arrangement is provided in such a way that when the alarm state is present the automatic decoupling device is actuated in order to decouple the drive motor from the cutting mechanism.

3. Gardening device according to the preceding patent Claim 2, **characterized in that** a brake device is provided which stops the movement of the tool and/or the force transmission means at least when an alarm state is present.

4. Gardening device according to one of the preceding patent Claims 1 to 3, **characterized in that** at least one spring-loaded push button key is provided in the region of the steering wheel (5) for triggering the override circuit, which push button key goes automatically, without activation, into a basic state which does not trigger the override circuit.

5. Gardening device according to one of the preceding patent Claims 1 to 4, **characterized in that** the fall back function is embodied in such a way that it monitors the at least one sensor (6) which has been passed over and removes the override circuit as soon as an object is not found in the monitored distance area.

6. Method for monitoring a gardening device according to the preamble of patent Claim 1, **characterized in that** the at least one sensor (6) is used to detect the approaching of an object or the approaching to an object in the directly surrounding area of the gardening device (1), and when a predefined distance is undershot an alarm state is triggered, wherein the triggering of an alarm state can be suppressed using the at least one override circuit.

7. Method according to the preceding patent Claim 6, **characterized in that** automatic decoupling of the force transmission means takes place, as a result of which the drive motor is decoupled from the tool.

## Revendications

1. Appareil de jardinage (1) à commande manuelle, comportant :
1.1 un siège (2) permettant de recevoir un utilisateur de l'appareil de jardinage ;
1.2 un carter (3) avec des roues (4) ;
1.3 un dispositif de direction, notamment un volant de direction (5) ;
1.4 un moteur d'entraînement ;
1.5 au moins un outil pouvant tourner ; et
1.6 une transmission de force entre le moteur d'entraînement et l'au moins un outil ;
1.7 au moins un capteur (6) étant disposé au niveau de l'appareil de jardinage pour détecter un objet (9) se déplaçant par rapport à l'appareil de jardinage (1) ou passant à une distance inférieure à une distance prédéfinie ;
1.8 un contacteur ou un émetteur de signaux de connexion auquel le capteur est relié étant prévu de façon à pouvoir déclencher un état d'alarme en cas de détection positive ; et
1.9 au moins un circuit de court-circuitage étant prévu permettant de ne pas tenir compte de l'état d'alarme ;
**caractérisé en ce que** :
1.10 l'au moins un circuit de court-circuitage comporte une fonction de temporisation automatique.

2. Appareil de jardinage selon la revendication 1, **caractérisé par** la présence d'un dispositif de découplage automatique de la transmission de force et d'un agencement de connexion permettant, en présence de l'état d'alarme, de commander au dispositif de découplage automatique de découpler le moteur d'entraînement de l'outil tranchant.

3. Appareil de jardinage selon la revendication 2, **caractérisé en ce qu'**un dispositif de freinage est prévu qui arrête le mouvement de l'outil et/ou de la transmission de force au moins en présence d'un état d'alarme.

4. Appareil de jardinage selon l'une quelconque des revendications 1 à 3, **caractérisé en ce qu'**au moins un bouton-poussoir chargé par ressort est placé dans la région du volant de direction (5) pour déclencher le circuit de court-circuitage, ledit bouton-poussoir passant automatiquement, sans actionnement, dans un état de base ne déclenchant pas le circuit de court-circuitage.

5. Appareil de jardinage selon l'une quelconque des revendications 1 à 4, **caractérisé en ce que** la fonction de temporisation est réalisée de telle sorte qu'elle surveille l'au moins un capteur (6) court-circuité et que le circuit de court-circuitage est supprimé dès qu'aucun objet ne se trouve plus dans la région surveillée.

6. Procédé de surveillance d'un appareil de jardinage selon le préambule de la revendication 1, **caractérisé en ce qu'**une approche d'un objet ou une approche par rapport à un objet situé à proximité immédiate de l'appareil de jardinage (1) est détectée à l'aide de l'au moins un capteur (6) et qu'en cas de passage en dessous d'une distance prédéfinie, un état d'alarme est déclenché, le déclenchement d'un état d'alarme pouvant ne pas être pris en compte par le biais de l'au moins un circuit de court-circuitage.

7. Procédé selon la revendication 6, **caractérisé en ce qu'**un découplage automatique de la transmission de force se produit pour découpler le moteur d'entraînement de l'outil.
